# EUROPEAN PATENT APPLICATION

(11) **EP 1 193 279 A2**
(43) Date of publication of application: **03.04.2002**
(21) Application number: 01308245.8
(22) Date of filing: 27.09.2001
(51) Int. Cl.: C08G 18/62, C09D 175/04

(54) **Coating composition for undercoat and coating method for repair employing the same**

(30) Priority: 28.09.2000 JP 2000296618
(71) Applicant: Kansai Paint Co. Ltd., Hiratsuka-shi, Kanagawa (JP)
(72) Inventor: Tomita, Shinji, Amagasaki-shi, Hyogo (JP); Yanagiguchi, Takeo, Amagasaki-shi, Hyogo (JP); Akane, Nobuhito, c/o Kainsai Paint Co., Ltd., Hiratsuka-shi, Kanagawa (JP); Hara, Sadamu, Amagasaki-shi, Hyogo (JP)
(74) Representative: Baverstock, Michael George Douglas

(57) **Abstract**

A coating composition for an undercoat comprises (A) an acrylic resin having a hydroxyl value of 30 to 85 and a weight average molecular weight of 1000 to 30000, (B) a pigment, (C) resin fine particles, (D) a polyisocyanate compound, and (E) a curing catalyst. The employment of an isocyanate-rich two-pack type coating effects a high content of solid matter at spray coating which allows the formation of a thick film, and enables the formation of a coated film curable within a short period of time after coating and excellent in substrate-shielding ability and solvent resistance.

## Description

The present invention relates to a coating composition for an undercoat effecting a high content of solid matter at coating and capable of forming a coated film excellent in drying ability and substrate-shielding ability, particularly useful in the automobile-repair field, and a coating method for repair employing the same.

Hitherto, a coating method for repairing outer panels of automobiles and the like usually comprised a number of steps, for example, steps of removing old coated film at a damaged part and sanding, applying thickly a putty for plate working onto the part with a putty knife or the like, sanding the puttied surface after drying, applying synthetic plaster thereon with a knife so that the neighboring old coated film is also puttied, sanding the puttied surface after drying, and giving successive primer surfacer or filler coat and topcoat thereon. Particularly, the steps from puttying to primer surfacer or filler coat are steps for reducing strains at the damaged part and adjusting the body to the original shape, the so-called body shape remedy coating process, so that a lot of effort and time are consumed because different kinds of putties are applied in several steps and the coated surface is sanded after each coating to attain a good finish. Also, even at the repair of striated or spotted petty scratch, sanding is carried out over a wide area centered on the scratch and including the periphery and then the sanded part is puttied.

In order to make the best use of the characteristics of both the putty for plate working and the synthetic plaster described above, it is usually necessary to employ both putties in combination. Furthermore, since the applied surface is rough, the surface is sanded with a coarse water-proof abrasive paper in the case of the putty for plate working, so that marks from which pigment and the like are pared off and paper trails remain on the putty-applied surface. Therefore, the surfaces on which the synthetic plaster and primer surfacer or filler are applied should be sanded with a finer water-proof abrasive paper.

As described above, in order to shorten the repair coating time, it is desirable that the steps from the puttying to the primer surfacer or filler coating should be simplified and the sanding time and the time before applying the topcoat should be shortened.

For this purpose, it has been proposed to simplify the puttying step and sanding process by imparting a function capable of forming a thick film to the primer surfacer or filler so as to shield sufficiently the inconvenient parts on the puttied surface such as the paper trails owing to insufficient sanding, but it is difficult to balance the function with performance of the coated films such as drying ability and solvent resistance.

As a result of extensive studies for solving the above problems, the present inventors have found that the employment of an isocyanate-rich two-pack type coating wherein a specific acrylic polyol, pigment and resin fine particles are used effects a high content of solid matter when spray coating which allows the formation of a thick film, and enables the formation of a coated film curable within a short period of time after coating and which is excellent in substrate-shielding ability and solvent resistance, whereby the sanding time and the time before the topcoat is applied can be shortened and the puttying step can be simplified in the case of a petty scratch. Based on these findings, they have accomplished the present invention.

Specifically, the present invention relates to a coating composition for an undercoat that comprises (A) an acrylic resin having a hydroxyl value of 30 to 85 and a weight average molecular weight of 1000 to 30000, (B) a pigment, (C) resin fine particles, (D) a polyisocyanate compound, and (E) a curing catalyst. The ratio of the isocyanate groups in the (D) component to 1 equivalent of the hydroxyl groups in the (A) component is 2.0 to 4.0 equivalents. The content of the (B) component is from 100 to 500 parts by weight relative to 100 parts by weight of the resin solid matter. The (C) component is mixed so as to be from 0.1 to 5% by weight as solid matter relative to the weight of the (B) component.

The acrylic resin (A) may be a resin obtainable by polymerizing an acrylic monomer having hydroxyl group as an essential monomer and another acrylic monomer and/or a vinyl monomer.

This invention also relates to a coating method for repair that includes the steps of conducting surface treatment at a part to be repaired, providing an undercoat, and providing a topcoat. At the undercoating step, the coating composition described above is used.

In the present invention, the acrylic resin (A) may be an acrylic resin having a hydroxyl value of 30 to 85, preferably 40 to 70, and a weight average molecular weight of 1000 to 30000, preferably 3000 to 20000. When the hydroxyl value is less than 30, the performance of the coated film is reduced, and when it exceeds 85, the content of the solid matter at coating decreases. Also, when the weight average molecular weight is less than 1000, the performance of the coated film formed is significantly reduced, and when it exceeds 30000, the viscosity of the coating composition increases and the content of the solid matter at coating decreases. Thus, these situations are not desirable. Moreover, the acrylic resin (A) has preferably a glass transition temperature (Tg) within the range of 40 to 90°C with a view to the enhancement of drying ability.

As the monomers constituting the acrylic resin (A), an acrylic monomer having hydroxyl group is an essential monomer and another acrylic monomer and/or a vinyl monomer can be used, and the resin is obtainable by subjecting these monomers to usual radical polymerization. Examples of the monomer having a hydroxyl group include hydroxyalkyl (meth)acrylates such as 2-hydroxyethyl methacrylate, 2-hydroxyethyl acrylate, hydroxypropyl methacrylate, hydroxypropyl acrylate, and 4-hydroxybutyl acrylate; lactone-modified α,β-ethylenic unsaturated monomers wherein 1 to 10 mol of a lactone such as ε-caprolactone or γ-butyrolactone is added to hydroxyalkyl (meth)acrylates; and the like. Moreover, examples of other acrylic monomers and/or vinyl monomers include methyl (meth)acrylate, n-butyl (meth)acrylate, iso-butyl (meth)acrylate, tert-butyl (meth)acrylate, 2-ethylhexyl (meth)acrylate, cyclohexyl (meth)acrylate, lauryl (meth)acrylate, styrene, α-methylstyrene and (meth)acrylic acid. As a usual radical polymerization, solution polymerization may be mentioned, for example.

In the present invention, as the pigment (B), a body pigment such as talc, mica, barium sulfate, kaolin, calcium carbonate, clay, silica, quartz or glass can be used and further, a color pigment such as titanium white, red iron oxide, carbon black and iron black may be included. The content of the pigment (B) may be from 100 to 500 parts by weight, preferably 150 to 350 parts by weight relative to 100 parts by weight of the resin solid matter. When the content is less than 100 parts by weight, workability at sanding is inferior, and when it exceeds 500 parts by weight, the finishing property after application of the topcoat is reduced. Thus, both situations are not desired. For dispersing the pigment (B), it is desirable to employ a pigment dispersant, and particularly, a dispersant containing a tertiary amino group is suitably employed with a view to reducing the viscosity of the dispersed paste.

In the present invention, the resin fine particles (C) include resin particles such as hitherto known polymer beads, finely pulverized polymers of the above monomers and gelatinized polymer fine particles (for example, cf. Japanese Laid-Open Patent Applications Nos. 126287/1976, 133233/1978, 133236/1978, 76447/1981, and 129065/1983 (USP. 4468493)). In particular, gelatinized polymer fine particles obtainable by emulsion polymerization of a monomer mixture containing a divinyl monomer in the presence of a reactive emulsifier containing an allyl group (for example, cf. Japanese Laid-Open Patent Application No. 66770/1991 (USP. 5348998)) may be suitably employed owing to the excellent dispersability toward the (A) and (B) components.

Examples of the divinyl monomer for use in the production of the gelatinized polymer particles include ethylene glycol di(meth)acrylate and 1,6-hexanediol diacrylate. Also, examples of the other monomer include hitherto known polymerizable unsaturated monomers such as alkyl (meth)acrylates, monomers containing hydroxyl group, and styrene. These monomers are optionally selected. Moreover, a water-soluble azo-amide compound or the like may be employed as a polymerization initiator in the emulsion polymerization.

The size of the above resin fine particles (C) may be optionally selected without particular limitation, but is suitably in the range of usually 30 µm or less, preferably 0.05 to 10 µm. The adjustment of the particle size can be effected by a conventionally known method, and for example, it may be achieved by controlling the kind and amount of the reactive emulsifier in the case of the above gelatinized polymer fine particles.

The resin fine particles (C) are mixed so as to be from 0.1 to 5% by weight, preferably 0.5 to 2% by weight as a solid matter relative to the weight of the above (B) component. When the mixing ratio of the resin fine particles (C) exceeds 5% by weight, the viscosity of the composition is increased and workability is reduced. On the other hand, the precipitation-preventing effect toward the (B) component is not attained during storage of the coating composition, particularly in a high temperature environment when it is less than 0.1% by weight. Thus, both situations are undesirable.

In the present invention, the polyisocyanate compound (D) is a polyisocyanate compound having two or more, preferably three isocyanate groups in one molecule. Specific examples thereof include polyisocyanate compounds such as hexamethylene diisocyanate, trimethylhexamethylene diisocyanate, isophorone diisocyanate, hydrogenated xylylene diisocyanate, xylylene diisocyanate, m-tetramethylxylylene diisocyanate, tolylene diisocyanate, 4,4'-diphenylmethane diisocyanate, and lysine diisocyanate; adducts of these polyisocyanate compounds with a polyhydric alcohol, a low-molecular-weight polyester resin, or water; cyclized polymers of the polyisocyanate compounds described above; isocyanate·biuret compounds; and the like. These may be used singly or as a mixture of two or more.

In the present invention, the above (A) component and the above (D) component are mixed so that the ratio of the isocyanate groups in the (D) component to 1 equivalent of the hydroxyl groups in the (A) component is 2.0 to 4.0 equivalents, preferably 2.2 to 3.5 equivalents. When the ratio of (D) is less than 2.0 equivalents, the curing of the coated film is insufficient and it is apt to dissolve in the solvent contained in the coating composition for the topcoat. When the ratio exceeds 4.0 equivalents, the drying ability of the coated film is significantly reduced. Thus, both of these situations are undesirable.

In the present invention, as the curing catalyst (E), hitherto known urethanization catalysts can be employed without particular limitation, and examples thereof include metal compounds such as bismuth nitrate, lead oleate, tin octylate, dibutyltin dilaurate, dibutyltin bis(acetylacetonate), titanium tetrachloride, dibutyltitanium dichloride, tetrabutyl titanate, iron trichloride, and zinc octylate; and tertiary amines. The content of the curing catalyst (E) is suitably from 0.1 to 10% by weight, preferably 0.2 to 5% by weight relative to the resin solid matter. When the content is less than 0.1% by weight, the curing of the coated film is insufficient and it is apt to dissolve in the solvent contained in the coating composition for the topcoat. On the other hand, when it exceeds 10% by weight, the viscosity after mixing the main agent with the curing agent increases rapidly. Thus, both situations are undesirable.

The composition of the present invention may be optionally mixed with additives for coating compositions such as an organic solvent, a cellulose derivative, a non-aqueous dispersing resin, and a leveling agent including a dimethylsiloxane copolymer.

The composition of the present invention thus obtained can be a two-pack type composition, and at the time of use, the main agent containing the (A), (B), (C), and (E) components is mixed with a curing agent containing the (D) component immediately before coating. Moreover, in the composition of the present invention, it is possible to increase the solid matter at coating to 55 to 70% by the above compositional ratio.

The present invention further provides a coating method for repair wherein the above composition is employed for the undercoat.

The coated films for repair to which the method of the present invention can be applied may be coated films coated on outer panels of automobiles and household electrical goods, for example. These are mostly multilayer coated films comprising an undercoat film, an intermediate coat film (which may be sometimes be omitted), and a topcoat film. Moreover, the coated film may be either a solid type or a metallic type. The total film thickness of these multilayer coated films is usually in the range of 50 to 300 µ as the cured coated film. These coated films may be either three-dimensionally crosslinked and cured or not crosslinked.

In the method of the present invention, the damaged part of the coated film is firstly pared off, and the part or area centered on the damaged part and including the periphery when required is sanded and then degreased if necessary. When the damage is for example a line scratch or a spot scratch, the composition of the present invention can be directly applied to the degreased part. Depending on the damage, the pared part is charged with various putties and then the composition of the present invention can be applied thereto. The putty can be charged according to a method known *per se,* for example, by knife application. The putties may for example be a hitherto known putty for plate working or synthetic plaster. For example, there may be mentioned nitrocottons, acrylic resins, epoxyacrylate resins, unsaturated polyester resins and urethane resins. When the putty is applied, it is preferred to sand the puttied surface after drying, but there is no problem even when the sanded surface is rough since the composition of the present invention has good substrate-shielding ability.

The composition of the present invention can be applied according to a hitherto known coating method, and particularly suitable is spray coating. The thickness of the coated film is within the range of 50 to 500 µm as a dry film thickness, and a thick coating is possible.

After the drying of the coated film derived from the composition of the present invention, the film is sanded when required, and then a topcoat is applied. For the topcoat, hitherto known coating methods can be used, including a one coat finish wherein a base coating composition comprising a metallic pigment and/or color pigment is mixed or a two-coat finish wherein a base coating composition and a clear coating composition are used. For the coating, an organic solvent-type or aqueous coating composition for a topcoat usually used for repair such as an acrylic lacquer, a urethane-curable coating, or a fluorine resin coating can be employed without particular limitation, and a urethane-curable coating is particularly preferred.

### EXAMPLES

The following will explain the present invention in detail with reference to examples. By the way, "part(s)" and "%" mean "part(s) by weight" and "% by weight", respectively.

### Production of acrylic resin

A reactor was fitted with a thermometer, a thermostat, a stirrer, a reflux cooler, and a dropping pump, and was charged with xylene (42 parts) and butyl acetate (10 parts), and then the whole was warmed to 110°C under stirring. A mixture of monomers and a polymerization initiator comprising styrene (10 parts), methyl methacrylate (10 parts), n-butyl methacrylate (5 parts), i-butyl methacrylate (60 parts), methacrylic acid (1 part), 2-hydroxyethyl methacrylate (14 parts), and azobisisobutyronitrile (2.3 parts) was added dropwise by means of the dropping pump at 110°C or below at a constant rate over a period of 3 hours. After the completion of the addition, the whole was kept at 110°C for 60 minutes under continuous stirring. Thereafter, a solution of azobisisobutyronitrile (0.5 part) dissolved in butyl acetate (7 parts) was added, as an additional catalyst, dropwise at a constant rate over a period of 60 minutes. After the completion of the addition, the whole was kept at 110°C for 60 minutes and the reaction was completed. The resulting solution of an acrylic resin having hydroxyl group is a homogeneous transparent solution containing non-volatile matter in an amount of 55%, Gardner viscosity being X. Moreover, the acrylic resin has a weight average molecular weight of 18000, a hydroxyl value of 60, and Tg of 60°C.

### Production of resin fine particles

To a 1 liter flask fitted with a stirring apparatus, a thermometer, a cooler, and a heating mantle were added deionized water (3547.5 parts) and "Latemul S-120A" (manufactured by Kao Corporation, a sulfosuccinic acid-type allyl group-containing anionic reactive emulsifier, a 50% aqueous solution) (40 parts), and the whole was warmed to 90°C under stirring. Then, 20% of an aqueous solution of "VA-086" (manufactured by Wako Pure Chemical Industries, Ltd., a water-soluble azo-amide polymerization initiator) (12.5 parts) dissolved in deionized water (500 parts) was added thereto. After 15 minutes, 5% of a monomer mixture comprising styrene (300 parts), methyl methacarylate (400 parts), n-butyl acrylate (200 parts), and 1,6-hexanediol diacrylate (100 parts) was added thereto, followed by stirring for 30 minutes. Thereafter, the dropwise addition of the remaining monomer mixture and polymerization initiator aqueous solution was started, the monomer solution being added over a period of 3 hours and the polymerization initiator aqueous solution being added over a period of 3.5 hours while keeping the whole at 90°C during the addition. After the completion of the addition of the polymerization initiator aqueous solution, the whole was kept at 90°C for 30 minutes and then cooled to room temperature. Then, an aqueous gelatinized fine particle polymer water dispersion containing 20% solid matter was obtained by isolation using a filtering cloth. The particle size was 72 nm. The product was dried over a stainless pad to obtain resin fine particles G.

### Preparation of Coating Composition for Undercoat

### Example 1

To the acrylic resin solution containing 55% solid matter (25 parts) produced as described above were added the above described resin fine particles G (0.3 part), xylene (22 parts), a pigment dispersant containing a tertiary amino group (2.6 parts), titanium white (10 parts), talc (15 parts), barium sulfate (10 parts), calcium carbonate (15 parts), and dibutyltin dilaurate (0.1 part), successively. The whole was mixed and stirred for 30 minutes for dispersion to obtain a main agent. To the main agent (100 parts) was mixed "Duranate TPA90EK" (manufactured by Asahi Kasei Corporation, a polyisocyanate compound) (40 parts) immediately before use to obtain a coating composition for an undercoat.

### Examples 2 to 4 and Comparative Examples 1 to 3

Each coating composition for an undercoat was obtained in a similar manner to Example 1 with the exception that the formulation shown in Table 1 was used instead of that in Example 1.

The state of the main agent of each coating composition obtained in the above Examples was evaluated after 6 months storage at 40°C. In the Table, ⓞ shows that no problem is observed, ○ shows that slight thickening occurs but no precipitation nor agglomeration of the pigment is observed, and × shows that the pigment is precipitated or agglomerated to form a hard cake.

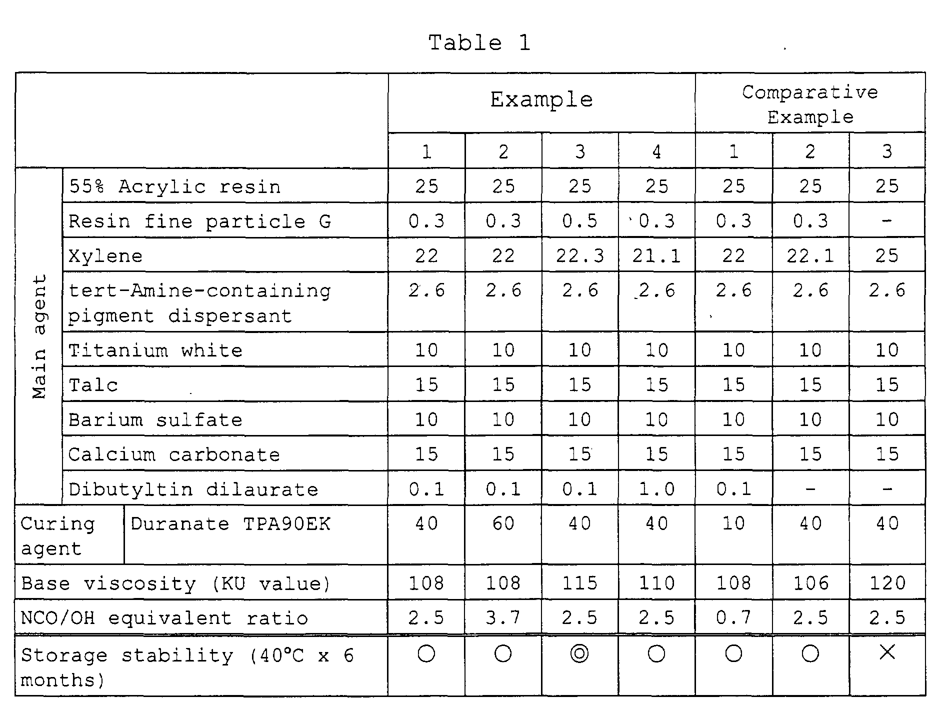

### Application of Coating

### Examples 5 to 8 and Comparative Examples 4 to 6

A mild steel plate 300 x 100 x 0.8 mm was sanded with a dry-sanding P240 paper, and each coating composition for an undercoat was thickened so that the solid matter at coating became 70% as a putty and also primer surfacer or filler, and sprayed thereon so that the dry film thickness became about 200 µm. After drying at 20°C for 60 minutes, the coated film was water-sanded with a P600 paper. Thereon was sprayed "PG2K metallic base No 123" (manufactured by Kansai Paint Co. Ltd., a urethane curable base coat coating) so that the dry film thickness became about 15 µm. After 10 minutes of setting, the coated plate was dried at 60°C for 10 minutes. Then, "PG2K M clear" (manufactured by Kansai Paint Co. Ltd., a urethane curable clear coating) was sprayed so that the dry film thickness became 40 to 50 µm and the coated plate was artificially dried at 60°C for 20 minutes to obtain each test coated plate.

### Examples 9 to 12 and Comparative Examples 7 to 9

To a mild steel plate 300 x 100 x 0.8 mm was applied "LUC polyputty" (manufactured by Kansai Paint Co. Ltd., an unsaturated polyester putty) so that the thickness became about 2 mm by means of a knife. After drying at room temperature for 60 minutes, the coated surface was sanded with a P120 dry-sanding paper so as to smoothen the surface. Each coating composition for the undercoat was thickened so that the solid matter at coating became 50% as a primer surfacer or filler and sprayed thereon so that the dry film thickness became about 60 µm. After drying at 20°C for 60 minutes, the coated plate was water-sanded with a P600 paper. The plate was further coated with "Acrylic 2101 metallic base" (a cellulose acetate butyrate-modified acrylic lacquer, aerosol-type, manufactured by Kansai Paint Co. Ltd.) so that the dry film thickness became about 20 µm. After 10 minutes of setting at room temperature, the coated plate was coated with "PG2K one-pack clear" (a urethane curable clear, aerosol-type, manufactured by Kansai Paint Co. Ltd.) so that the dry film thickness became about 40 µm and then dried to obtain each test coated plate.

### Performance Test

Each of the resulting each test coated plates was subjected to the following performance tests. The results are shown in Tables 2 and 3.

**Table 2**

| | Example | | | | Comparative Example | | |
|---|---|---|---|---|---|---|---|
| | 5 | 6 | 7 | 8 | 4 | 5 | 6 |
| Kind of Coating composition for undercoat | Example 1 | Example 2 | Example 3 | Example 4 | Comp. Ex. 1 | Comp. Ex. 2 | Comp. Ex. 3 |
| Sanding ability | ○ | ○ | ○ | ○ | ○ | × | × |
| Suitability for topcoat | ○ | ○ | ○ | ○ | Δ | × | × |

**Table 3**

| | Example | | | | Comparative Example | | |
|---|---|---|---|---|---|---|---|
| | 9 | 10 | 11 | 12 | 7 | 8 | 9 |
| Kind of Coating composition for undercoat | Example 1 | Example 2 | Example 3 | Example 4 | Comp. Ex. 1 | Comp. Ex. 2 | Comp. Ex. 3 |
| Sanding ability | ○ | ○ | ○ | ○ | ○ | × | × |
| Substrate shielding ability | ○ | ○ | ○ | ○ | Δ | × | × |
| Suitability for topcoat | ○ | ○ | ○ | ○ | Δ | × | × |
| (*1) Sanding ability: a feeling at sanding was evaluated at the time when the primer surfacer or filler surface was ground with a P600 paper at the preparation of each test coated plate (○: good, Δ: slightly entangled, ×: considerably entangled). (*2) Substrate shielding ability: the disappearance of the scratch caused by abrasive paper at sanding the putty on the test coated plate of Examples 9 to 12 and Comparative Examples 7 to 9 was evaluated by observing the state of the coated surface of the topcoat (○: no influence of the paper scratch is observed, Δ: slight influence of the paper scratch is observed, ×: the paper scratch does not disappear and the finish property is reduced). (*3) Suitability for topcoat: the luster of the coated surface for the topcoat of each test coated plate was observed (○: good, Δ: the luster is slightly reduced, ×: the luster is considerably reduced and penetrated prints are observed). | | | | | | | |

According to the present invention, the employment of an isocyanate-rich two-pack type coating wherein a specific acrylic polyol, pigment and resin fine particles are used, effects a high content of solid matter at spray coating which allows the formation of a thick film, and enables the formation of a coated film curable within a short period of time after coating and excellent in substrate-shielding ability and solvent resistance, whereby the sanding time and the time before applying a topcoat can be shortened and the puttying step can be simplified in the case of a petty scratch. Moreover, the composition of the present invention is excellent in storage stability even at a high concentration of pigment and in a high temperature environment, and does not result in problems such as precipitation and agglomeration of the pigment. The composition of the present invention is an extremely useful coating composition particularly as a primer surfacer or filler composition in the field of the coatings for automobile-repairing; furthermore a composition for puttying capable of spraying.

The disclosure of Japanese Patent Application No. 2000-296618 filed September 28, 2000, including specification, drawings and claims is incorporated herein by reference in its entirety.

Although only some exemplary embodiments of this invention have been described in detail above, those skilled in the art will readily appreciate that many modifications are possible in the exemplary embodiments without materially departing from the novel teachings and advantages of this invention as claimed.

Accordingly, all such modifications are intended to be included within the scope of this invention.

## Claims

1. A coating composition for an undercoat comprising:
(A) an acrylic resin having a hydroxyl value of 30 to 85 and a weight average molecular weight of 1000 to 30000,
(B) a pigment,
(C) resin fine particles,
(D) a polyisocyanate compound, and
(E) a curing catalyst; wherein:
the ratio of isocyanate groups in the (D) component to 1 equivalent of hydroxyl groups in the (A) component is 2.0 to 4.0 equivalents;
the content of the (B) component is from 100 to 500 parts by weight relative to 100 parts by weight of resin solid matter; and
the (C) component is mixed so as to be from 0.1 to 5%-by weight as solid matter relative to the weight of the (B) component.

2. The coating composition for an undercoat according to claim 1, wherein the acrylic resin (A) is a resin obtainable by polymerizing an acrylic monomer having a hydroxyl group as an essential monomer and another acrylic monomer and/or a vinyl monomer.

3. A coating method for repair comprising the steps of: conducting surface treatment at a part to be repaired; providing an undercoat; and providing a topcoat; wherein the coating composition for the undercoat comprises: (A) an acrylic resin having a hydroxyl value of 30 to 85 and a weight average molecular weight of 1000 to 30000, (B) a pigment, (C) resin fine particles, (D) a polyisocyanate compound, and (E) a curing catalyst; wherein:
the ratio of isocyanate groups in the (D) component to 1 equivalent of hydroxyl groups in the (A) component is 2.0 to 4.0 equivalents;
the content of the (B) component is from 100 to 500 parts by weight relative to 100 parts by weight of the resin solid matter; and
the (C) component is mixed so as to be from 0.1 to 5% by weight as solid matter relative to the weight of the (B) component.
